# EUROPÄISCHE PATENTANMELDUNG

(11) **EP 2 020 272 A1**
(43) Veröffentlichungstag der Anmeldung: **04.02.2009**
(21) Anmeldenummer: 08013744.1
(22) Anmeldetag: 31.07.2008
(51) Int. Cl.: B23K 9/02, B23K 9/028, B23K 9/167, B23K 9/29, B23K 101/10

(54) **Verfahren und eine Vorrichtung zum Schweißen von Rundnähten**

(30) Priorität: 31.07.2007 DE 102007036289
(71) Anmelder: Essener Hochdruck-Rohrleitungsbau GmbH, 45329 Essen (DE)
(72) Erfinder: Gräb, Thomas, Dr., 46535 Dinslaken (DE)
(74) Vertreter: Ullrich & Naumann

(57) **Zusammenfassung**

Ein Verfahren zum Schweißen von Rundnähten zur Verbindung zweier Bauteile (1, 2), insbesondere von dickwandigen Bauteilen (1, 2) oder Rohren, wobei eine Wurzel in einer Engspaltfuge (3) zwischen den Bauteilen (1, 2) erzeugt wird und die Engspaltfuge (3) anschließend mittels vollmechanischem Orbitalschweißen gefüllt wird, ist im Hinblick auf eine sichere und einfach herzustellende Schweißverbindung derart weitergebildet, dass die Wurzel mittels des WIG-Verfahrens - m-141 - manuell geschweißt wird. Des Weiteren ist eine Vorrichtung zum Schweißen von Rundnähten zur Verbindung zweier Bauteile (1, 2), insbesondere von dickwandigen Bauteilen (1, 2) oder Rohren, vorzugsweise zur Durchführung des obigen Verfahrens, mit einem eine Düse aufweisenden WIG-Brenner, insbesondere manuell geführten WIG-Brenner, wobei die Düse eine zumindest abschnittsweise innerhalb der Düse angeordnete Elektrode aufweist, angegeben, wobei die Düse zumindest an ihrem freien Ende eine ovale oder rechteckige Querschnittsform aufweist.

## Beschreibung

Die Erfindung betrifft ein Verfahren zum Schweißen von Rundnähten zur Verbindung zweier Bauteile, insbesondere von dickwandigen Bauteilen oder Rohren, wobei eine Wurzel in einer Engspaltfuge zwischen den Bauteilen erzeugt wird und die Engspaltfuge anschließend mittels vollmechanischem Orbitalschweißen gefüllt wird. Des Weiteren betrifft die Erfindung eine Vorrichtung zum Schweißen von Rundnähten zur Verbindung zweier Bauteile, insbesondere von dickwandigen Bauteilen oder Rohren, mit einem eine Düse aufweisenden WIG-Brenner, insbesondere manuell geführten WIG-Brenner, wobei die Düse eine zumindest abschnittsweise innerhalb der Düse angeordnete Elektrode aufweist.

Verfahren zum Schweißen von Rundnähten der eingangs genannten Art sind aus der Praxis bekannt. Dabei ist es insbesondere bekannt, das Schweißen einer Wurzel beim vollmechanischen WIG-Schweißen (Begriff gemäß DIN ISO 857-1, v-141, Wolfram-Inertgasschweißen, englisch: TIG-Welding) der nachfolgenden Fülllagen mittels eines Orbitalgerätes an Rohrrundnähten in Engspalttechnik bzw. Engfugentechnik (englisch: narrow gap) ebenfalls mit dem vollmechanischen Gerät auszuführen. Als Standardnahtvorbereitung wird hierzu eine sogenannte Orbitallippe oder eine vergleichbare, mit dem vollmechanischen WIG-Verfahren sicher aufschmelzbare Geometrie im Wurzelbereich angearbeitet. Der Engspalt zeichnet sich dabei durch eine geringe Nahtöffnung im Decklagenbereich und eine Steilflanke im Fülllagenbereich mit kleinem Flankenwinkel aus.

Des Weiteren sind Vorrichtungen zum Schweißen von Rundnähten zur Verbindung zweier Bauteile bekannt, die einen eine Düse aufweisenden WIG-Brenner aufweisen, wobei die Düse eine zumindest abschnittsweise innerhalb der Düse angeordnete Elektrode aufweist. Mit derartigen Vorrichtungen ist das Schweißen von Rundnähten zur Verbindung zweier Bauteile möglich, zwischen denen eine für Standardschweißausrüstungen ausreichende Zugänglichkeit existiert.

Der Vorteil des WIG-Orbital-Engspaltschweißens gegenüber vergleichbar einsetzbaren Baustellen-Schweißverfahren ergibt sich im Wesentlichen durch die deutliche Verringerung des Nahtvolumens. Bei Verwendung des vollmechanischen Orbitalgerätes zum Wurzelschweißen ist jedoch ein sehr hoher zeitlicher und technischer Aufwand beim Anfertigen der Nahtvorbereitung aufgrund geringer Toleranzvorgaben und insbesondere zur Ausrichtung der Nähte aufgrund äußerst geringer Toleranzen beim Zusammenbau vor dem Schweißen in Bezug auf den Kantenversatz und Nahtwurzelspalt erforderlich. Diese aufwendige Vorbereitung im Hinblick auf die Positionierung der zu verbindenden Bauteile dient der sicheren Erfassung der Wurzel bei Anwendung des vollmechanischen WIG-Orbitalschweißens, um Schweißfehler zu vermeiden. Durch diesen erheblichen Zeitaufwand zur Erhaltung der Toleranzvorgaben, die den Einsatz des vollmechanischen Wurzelschweißens erst ermöglichen, wird jedoch ein bedeutender Teil des Vorteils des WIG-Orbitalschweißens wieder aufgehoben. Dies gilt insbesondere für dickwandige Bauteile, da eine möglicherweise erforderliche Reparatur zunehmend kostenintensiver wird, wobei zu berücksichtigen ist, dass die Wanddicke der zu verbindenden Bauteile häufig 100 mm und mehr beträgt.

Der vorliegenden Erfindung liegt daher die Aufgabe zugrunde, ein Verfahren und eine Vorrichtung zum Schweißen von Rundnähten anzugeben, wonach eine sichere Schweißverbindung auf einfache Weise realisierbar ist.

Erfindungsgemäß wird die voranstehende Aufgabe zum einen durch ein Verfahren mit den Merkmalen des Patentanspruchs 1 gelöst. Danach ist das Verfahren der eingangs genannten Art derart ausgestaltet und weitergebildet, dass die Wurzel mittels des WIG-Verfahrens - m-141 - manuell geschweißt wird.

Erfindungsgemäß ist zunächst erkannt worden, dass es zur Realisierung einer sicheren Schweißverbindung nicht erforderlich ist, die Technik des Schweißens der Wurzel mit dem Orbitalschweißgerät weiter zu verbessern. In Abkehr von dieser bislang praktizierten Entwicklungsrichtung wird die Wurzel in erfindungsgemäßer Weise mittels des WIG-Verfahrens - m-141 - manuell geschweißt. Hierdurch wird der Aufwand hinsichtlich des Vorrichtens und Positionierens der Bauteile ganz erheblich reduziert, da die für das manuelle Schweißen vorliegenden Toleranzvorgaben aus verfahrenstechnischer Sicht bei weitem nicht so streng sind, wie es beim vollmechanischen Orbitalschweißen mittels des Orbitalgeräts der Fall ist. Vielmehr ist mittels des manuellen Schweißens eine gegenüber dem vollmechanischen Schweißen deutlich erhöhte Fertigungssicherheit bei der Wurzelschweißung unter reproduzierbaren Verhältnissen möglich. Die Vorbau- und Nahtvorbereitungstoleranzen sind hierbei weit größer. Letztendlich ist insbesondere bei dickwandigen, rohrförmigen Querschnitten die Sicherheit einer vorschriftsmäßig ausgeführten Naht im Wurzelbereich deutlich erhöht, wodurch sich unmittelbar ein erheblicher wirtschaftlicher Vorteil gegenüber dem nicht so sicheren vollmechanischen Orbitalschweißen im Bereich der Wurzel ergibt. Nach der Herstellung der Wurzel mittels des manuellen Schweißens ist ein Füllen der Engspaltfuge mittels des vollmechanischen Orbitalschweißens auf einfache und sichere Weise ermöglicht, so dass sich mit dem erfindungsgemäßen Verfahren eine besonders sichere und einfache Schweißverbindung insgesamt realisieren lässt.

Im Konkreten ist das Orbitalschweißen ein WIG-Schweißen - v-141. Es handelt sich hierbei also um ein Wolfram-Inertgasschweißen.

Im Hinblick auf eine besonders sichere Schweißverbindung könnte nach dem Erzeugen der Wurzel und vor dem Füllen der Engspaltfuge mindestens eine Stützlage auf der Wurzel mittels des WIG-Verfahrens - m-141 - manuell geschweißt werden. Mit anderen Worten könnte zusätzlich zu dem Schweißen der Wurzel mindestens eine auf der Wurzel anzuordnende Stützlage ebenfalls manuell geschweißt werden.

Als für das manuelle Schweißen besonders geeignete Breite eines Wurzelspalts in der Engspaltfuge könnte diese Breite zwischen 0 und 5 mm gewählt werden. Hierdurch ist eine sichere und besonders stabile Wurzel erzeugbar.

In weiter vorteilhafter Weise könnte die Anfasung der Engspaltfuge im Fülllagenbereich als Steilflanke mit einem Flankenwinkel von 0° bis maximal 5° gewählt werden. Hierdurch sind einerseits eine sichere Schweißung der Wurzel und andererseits ein geringes zu verfüllendes Spaltvolumen erreicht. Dabei könnte mehr als 50 % der Tiefe der Engspaltfuge als derartige Steilflanke gewählt werden.

Ebenfalls im Hinblick auf eine besonders sichere und stabile Wurzel könnte die Anfasung der Engspaltfuge im Wurzelbereich mit einer V-Naht-Vorbereitung mit einem Winkel von maximal 45°, vorzugsweise 30°, gewählt werden. Diese Wahl der Anfasung der Engspaltfuge im Wurzelbereich ermöglicht eine gute Zugänglichkeit und damit ein sicheres Schweißen der Wurzel.

Die zu verbindenden Bauteile könnten Wanddicken von 45 mm und mehr aufweisen und/oder aus einem Stahl oder einer Nickelbasislegierung hergestellt sein. Als Stahl kommen beispielsweise ferritische oder martensitische Stähle in Frage.

Die obige Aufgabe wird des Weiteren durch eine Vorrichtung mit den Merkmalen des Patentanspruchs 9 gelöst. Danach ist die Vorrichtung der eingangs genannten Art derart ausgestaltet und weitergebildet, dass die Düse zumindest an ihrem freien Ende eine ovale oder rechteckige Querschnittsform aufweist.

In erfindungsgemäßer Weise ist bei der Ausgestaltung der Vorrichtung erkannt worden, dass mit einer geschickt ausgestalteten Düse insbesondere eine Wurzel in einem Engspalt besonders sicher schweißbar ist. Hierzu weist die Düse zumindest an ihrem freien Ende eine ovale oder rechteckige Querschnittsform auf. Diese ovale oder rechteckige Querschnittsform bietet im Vergleich zu bekannten runden Querschnittsformen einerseits einen besonders sicheren und einfachen Zugang auch in enge Spaltfugen und andererseits ein für den Schweißvorgang ausreichendes Innenvolumen der Düse. Folglich ist mit der erfindungsgemäßen Düse eine sichere Schweißverbindung auf einfache Weise realisierbar.

In weiter vorteilhafter Weise könnte die Düse einen Koppelbereich zur direkten oder indirekten Ankopplung an einen Brennerkörper und einen das freie Ende aufweisenden Endbereich aufweisen und könnten der Endbereich und der Koppelbereich vorzugsweise reversibel miteinander verbunden sein. Diese zumindest zweiteilige Ausgestaltung der Düse bietet eine hohe Flexibilität und Anpassbarkeit der Düse an unterschiedliche Gegebenheiten und Situationen insbesondere im Hinblick auf die Breite und Tiefe einer Engspaltfuge. Dabei können mit ein und demselben Koppelbereich unterschiedliche Endbereiche verbindbar sein. Auch ein Austausch eines verschlissenen Endbereichs könnte unter Weiterverwendung eines bereits vorhandenen Koppelbereichs auf einfache Weise ermöglicht sein, wodurch sich Material und Kosten einsparen lassen.

Grundsätzlich könnte der Endbereich mit dem Koppelbereich kraft- und/oder formschlüssig verbunden werden, wobei hier auch eine Klebung denkbar ist.

In besonders einfacher Weise könnte der Endbereich - vorzugsweise form- und/oder kraftschlüssig - auf den Koppelbereich aufsteckbar oder aufschraubbar oder in den Koppelbereich einsteckbar oder einschraubbar sein. Hierdurch ist eine einfache Austauschbarkeit des Endbereichs realisiert.

Zur Gewährleistung einer hohen Temperaturbeständigkeit könnte die Düse aus einem Quarzmaterial oder aus einem Keramikmaterial, vorzugsweise aus einer gezogenen Keramik, ausgebildet sein.

Das freie Ende oder der Endbereich der Düse kann hinsichtlich seiner Länge an den jeweiligen Einsatzfall angepasst sein. Dabei könnte das freie Ende oder der Endbereich der Düse mindestens 45 mm lang sein. Alternativ hierzu könnte das freie Ende oder der Endbereich der Düse mindestens 50 mm oder mindestens 55 mm lang sein.

Hinsichtlich einer besonders sicheren Ausgestaltung der Vorrichtung könnte der Düse eine Stützeinrichtung für die Elektrode zugeordnet sein. Mit einer derartigen Stützeinrichtung könnte ein ungewolltes Berühren des freien Endes oder des Endbereichs der Düse durch die Elektrode verhindert werden. Eine derartige ungewollte Berührung könnte in Abhängigkeit vom verwendeten Düsenmaterial zu einem Thermoschock und zu einer Zerstörung des freien Endes oder des Endbereichs der Düse führen.

Mit anderen Worten könnte die Stützeinrichtung die Elektrode gegenüber dem freien Ende oder dem Endbereich der Düse führen.

In besonders vorteilhafter Weise könnte die Stützeinrichtung aus schlecht wärmeleitfähigem Material ausgebildet sein.

In konstruktiv besonders einfacher Weise könnte die Stützeinrichtung einen Keramik- oder Quarzring aufweisen, der die Elektrode umgibt. In besonders wirkungsvoller Weise könnte die Stützeinrichtung im Endbereich oder nahe dem freien Ende der Düse angeordnet sein. Hierdurch ist eine besonders sichere Führung der Elektrode ermöglicht.

Alternativ oder zusätzlich zu einer derartigen Stützeinrichtung könnte der Elektrode eine Elektrodenführung zugeordnet sein, die bis zu einem weiteren Bauteil des Brenners, insbesondere bis zu einer Gaslinse oder Spannhülse, verlängert ist. Hierdurch könnte eine Zentrierung der Elektrode erreicht werden.

Ebenfalls im Hinblick auf die Vermeidung eines Thermoschocks könnte die Elektrode ein Adapterstück zur effektiven Verkürzung der Elektrode bezogen auf die durch die Düsenlänge erforderliche Gesamtlänge aufweisen, so dass lediglich ein vorderes Ende der Elektrode aus dem eigentlichen Elektrodenmaterial - bspw. Wolfram - ausgebildet sein könnte.

Das Adapterstück könnte aus einem elektrisch besonders gut leitfähigen Material ausgebildet sein, wobei sich hierbei in weiter vorteilhafter Weise Kupfer oder eine Kupferlegierung anbietet.

Das Adapterstück könnte auf einfache Weise mechanisch oder stoffschlüssig mit der Elektrode verbunden sein, um eine sichere Verbindung zwischen Adapterstück und eigentlichem Elektrodenmaterial zu gewährleisten. Im Hinblick auf eine sichere Anordnung der Elektrode in der Düse könnte das Adapterstück in oder an einer Spannhülse des Brenners befestigt sein.

Eine hierdurch erreichte Verkürzung der eigentlichen Wolfram-Elektrode ist bei einer Elektrodenlänge zwischen Einspannung und Lichtbogen von mehr als 50 mm einfach möglich.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines Ausführungsbeispiels des erfindungsgemäßen Verfahrens sowie der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen Darstellung die Engspaltfuge zwischen zwei zu verbindenden Bauteilen, bei denen das erfindungsgemäße Verfahren angewendet werden kann, und
- Fig. 2: in einer schematischen Darstellung den prinzipiellen Aufbau eines Brenners eines Ausführungsbeispiels einer erfindungsgemäßen Vorrichtung zum Schweißen von Rundnähten.

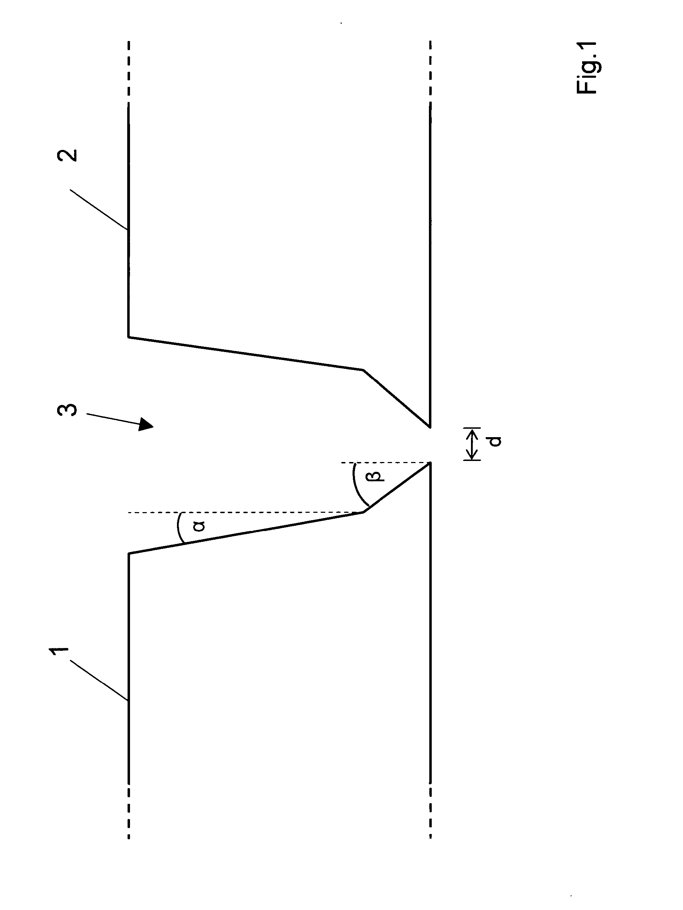

Fig. 1 zeigt in einer schematischen Darstellung einen Anwendungsfall für ein Ausführungsbeispiel des erfindungsgemäßen Verfahrens zum Schweißen von Rundnähten zur Verbindung zweier Bauteile 1 und 2. Zwischen den als Rohre oder rohrähnliche Querschnitte ausgebildeten Bauteilen 1 und 2 wird eine Wurzel in einer Engspaltfuge 3 zwischen den Bauteilen 1 und 2 erzeugt und wird die Engspaltfuge 3 anschließend mittels vollmechanischem Orbitalschweißen gefüllt. In Fig. 1 ist der Einfachheit halber nur ein Ausschnitt der Bauteile 1 und 2 im Bereich der Engspaltfuge 3 gezeigt. Im Hinblick auf eine sichere Schweißverbindung wird die Wurzel mittels des WIG-Verfahrens - m-141 - manuell geschweißt.

Die Breite d eines Wurzelspalts in der Engspaltfuge 3 wird zwischen 0 und 5 mm gewählt. Des Weiteren wird die Anfasung der Engspaltfuge 3 im Fülllagenbereich mit einem Flankenwinkel α von maximal 5° gewählt. Die Anfasung der Engspaltfuge 3 im Wurzelbereich wird mit einer V-Naht-Vorbereitung mit einem Winkel β von etwa 30° gewählt.

Aufgrund des manuellen Schweißens der Wurzel muss kein so großer Aufwand bei der Positionierung der Bauteile 1 und 2 vor dem Schweißen betrieben werden, wie dies bei einem Schweißen der Wurzel mittels des Orbitalgeräts erforderlich ist.

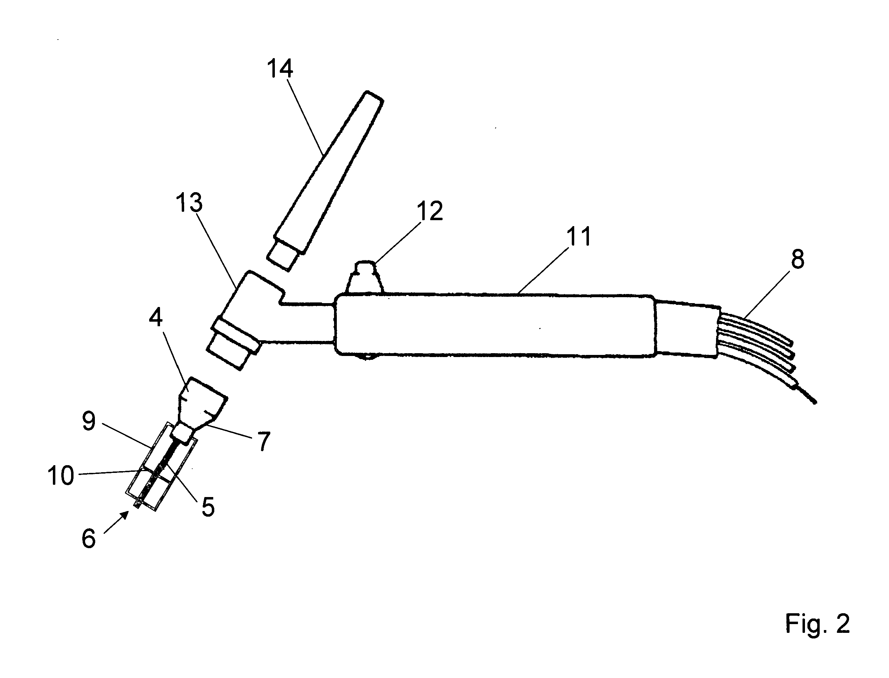

Fig. 2 zeigt in einer schematischen Darstellung den prinzipiellen Aufbau eines Brenners eines Ausführungsbeispiels einer erfindungsgemäßen Vorrichtung zum Schweißen von Rundnähten. Der Brenner weist eine Düse 4 mit einer innerhalb der Düse 4 angeordneten Elektrode 5 auf. Im Hinblick auf die Realisierung einer sicheren Schweißverbindung mit einfachen Mitteln weist die Düse 4 an ihrem freien Ende 6 eine rechteckige Querschnittsform auf. Aufgrund dieser Querschnittsform ist ein einfaches Einführen der Düse in die Engspaltfuge 3 zwischen zwei zu verbindenden Bauteilen 1 und 2 möglich.

Die Düse 4 weist einen Koppelbereich 7 zur Ankopplung oder Verschraubung an einen Brennerkörper 13 und einen das freie Ende 6 aufweisenden Endbereich 9 auf. Des Weiteren sind der Endbereich 9 und der Koppelbereich 7 reversibel miteinander verbunden. Im Konkreten ist der Endbereich 9 auf den Koppelbereich 7 aufsteckbar, um eine geeignet lange Düse 4 zu bilden, mit der die Wurzel in einer Engspaltfuge 3 manuell geschweißt werden kann.

Bei dem hier gezeigten Ausführungsbeispiel ist der Endbereich 9 der Düse 4 mindestens 50 mm lang.

Die Düse 4 weist des Weiteren eine Stützeinrichtung für die Elektrode 5 in Form eines Rings 10 auf, der die Elektrode 5 umgibt.

Der Brenner weist des Weiteren einen Handgriff 11 mit einem daran angeordneten Druckknopfschalter 12 und einem Anschlussbereich 8 auf. Der Handgriff 11 ist an einem Brennerkörper 13 angeordnet, auf den eine Brennerkappe 14 gesteckt ist.

Grundsätzlich werden beim WIG-Schweißen in Abhängigkeit von den geforderten Lichtbogenleistungen gas- oder wassergekühlte Brenner eingesetzt.

Hinsichtlich weiterer vorteilhafter Ausgestaltungen des erfindungsgemäßen Verfahrens oder der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Bauteil
- 2: Bauteil
- 3: Engspaltfuge
- 4: Düse
- 5: Elektrode
- 6: freies Ende
- 7: Koppelbereich
- 8: Anschlussbereich
- 9: Endbereich
- 10: Ring
- 11: Handgriff
- 12: Druckknopfschalter
- 13: Brennerkörper
- 14: Brennerkappe
- d: Breite
- α: Flankenwinkel
- β: Winkel

## Patentansprüche

1. Verfahren zum Schweißen von Rundnähten zur Verbindung zweier Bauteile (1, 2), insbesondere von dickwandigen Bauteilen (1, 2) oder Rohren, wobei eine Wurzel in einer Engspaltfuge (3) zwischen den Bauteilen (1, 2) erzeugt wird und die Engspaltfuge (3) anschließend mittels vollmechanischem Orbitalschweißen gefüllt wird,
**dadurch gekennzeichnet, dass** die Wurzel mittels des WIG-Verfahrens - m-141 - manuell geschweißt wird.

2. Verfahren nach Anspruch 1, **dadurch gekennzeichnet, dass** das Orbitalschweißen ein WIG-Schweißen - v-141 - ist.

3. Verfahren nach Anspruch 1 oder 2, **dadurch gekennzeichnet, dass** nach dem Erzeugen der Wurzel und vor dem Füllen der Engspaltfuge (3) mindestens eine Stützlage auf der Wurzel mittels des WIG-Verfahrens - m-141 - manuell geschweißt wird.

4. Verfahren nach einem der Ansprüche 1 bis 3, **dadurch gekennzeichnet, dass** die Breite (d) eines Wurzelspalts in der Engspaltfuge (3) zwischen 0 und 5 mm gewählt wird und/oder dass die Anfasung der Engspaltfuge (3) im Fülllagenbereich als Steilflanke mit einem Flankenwinkel (α) von 0° bis maximal 5° gewählt wird und/oder dass mehr als 50 % der Tiefe der Engspaltfuge (3) als Steilflanke gewählt wird und/oder dass die Anfasung der Engspaltfuge (3) im Wurzelbereich mit einer V-Naht-Vorbereitung mit einem Winkel (β) von maximal 45° gewählt wird und/oder dass die Bauteile (1, 2) aus einem Stahl oder einer Nickelbasislegierung hergestellt sind.

5. Vorrichtung zum Schweißen von Rundnähten zur Verbindung zweier Bauteile (1, 2), insbesondere von dickwandigen Bauteilen (1, 2) oder Rohren, vorzugsweise zur Durchführung des Verfahrens nach einem der Ansprüche 1 bis 4, mit einem eine Düse (4) aufweisenden WIG-Brenner, insbesondere manuell geführten WIG-Brenner, wobei die Düse (4) eine zumindest abschnittsweise innerhalb der Düse (4) angeordnete Elektrode (5) aufweist,
**dadurch gekennzeichnet, dass** die Düse (4) zumindest an ihrem freien Ende (6) eine ovale oder rechteckige Querschnittsform aufweist.

6. Vorrichtung nach Anspruch 5, **dadurch gekennzeichnet, dass** die Düse (4) einen Koppelbereich (7) zur direkten oder indirekten Ankopplung an einen Brennerkörper (13) und einen das freie Ende (6) aufweisenden Endbereich (9) aufweist und dass der Endbereich (9) und der Koppelbereich (7) vorzugsweise reversibel miteinander verbunden sind, wobei vorzugsweise der Endbereich (9) - vorzugsweise form- und/oder kraftschlüssig - auf den Koppelbereich (7) aufsteckbar oder aufschraubbar oder in den Koppelbereich (7) einsteckbar oder einschraubbar ist.

7. Vorrichtung nach Anspruch 5 oder 6, **dadurch gekennzeichnet, dass** die Düse (4) aus einem Quarzmaterial ausgebildet ist oder dass die Düse (4) aus einem Keramikmaterial, vorzugsweise aus einer gezogenen Keramik, ausgebildet ist.

8. Vorrichtung nach einem der Ansprüche 5 bis 7, **dadurch gekennzeichnet, dass** das freie Ende (6) oder der Endbereich (9) der Düse (4) mindestens 45 mm lang ist oder dass das freie Ende (6) oder der Endbereich (9) der Düse (4) mindestens 50 mm lang ist oder dass das freie Ende (6) oder der Endbereich (9) der Düse (4) mindestens 55 mm lang ist.

9. Vorrichtung nach einem der Ansprüche 5 bis 8, **dadurch gekennzeichnet, dass** der Düse (4) eine Stützeinrichtung für die Elektrode (5) zugeordnet ist, wobei vorzugsweise die Stützeinrichtung aus schlecht wärmeleitfähigem Material ausgebildet ist.

10. Vorrichtung nach Anspruch 9, **dadurch gekennzeichnet, dass** die Stützeinrichtung einen Keramik- oder Quarzring (10) aufweist.

11. Vorrichtung nach Anspruch 9 oder 10, **dadurch gekennzeichnet, dass** die Stützeinrichtung im Endbereich (9) oder nahe dem freien Ende (6) der Düse (4) angeordnet ist.

12. Vorrichtung nach einem der Ansprüche 5 bis 11, **dadurch gekennzeichnet, dass** der Elektrode (5) eine Elektrodenführung zugeordnet ist, die bis zu einem weiteren Bauteil des Brenners, insbesondere bis zu einer Gaslinse oder Spannhülse (8), verlängert ist.

13. Vorrichtung nach einem der Ansprüche 5 bis 12, **dadurch gekennzeichnet, dass** die Elektrode (5) ein Adapterstück aufweist, wobei vorzugsweise das Adapterstück aus einem elektrisch leitfähigen Material und/oder aus Kupfer oder aus einer Kupferlegierung ausgebildet ist.

14. Vorrichtung nach Anspruch 13, **dadurch gekennzeichnet, dass** das Adapterstück mechanisch oder stoffschlüssig mit der Elektrode (5) verbunden ist.

15. Vorrichtung nach Anspruch 13 oder 14, **dadurch gekennzeichnet, dass** das Adapterstück in oder an einer Spannhülse (8) des Brenners befestigt ist.
